(19) Europäisches Patentamt / European Patent Office / Office européen des brevets

(11) **EP 3 694 767 B1**

(12) **FASCICULE DE BREVET EUROPEEN**

(45) Date de publication et mention de la délivrance du brevet:
**25.05.2022 Bulletin 2022/21**

(21) Numéro de dépôt: **18756256.6**

(22) Date de dépôt: **27.08.2018**

(51) Classification Internationale des Brevets (IPC):
**B62D 15/02** (2006.01)

(52) Classification Coopérative des Brevets (CPC):
**B62D 15/0285**

(86) Numéro de dépôt international:
**PCT/EP2018/072949**

(87) Numéro de publication internationale:
**WO 2019/072449 (18.04.2019 Gazette 2019/16)**

(54) **PROCÉDÉ DE CONDUITE AUTOMATIQUE SOUS CONTRAINTE D'UN VEHICULE, NOTAMMENT D'UN BUS DANS UN CENTRE DE REMISAGE, ET DISPOSITIF METTANT EN OEUVRE UN TEL PROCÉDÉ**

VERFAHREN ZUR AUTOMATISCHEN STEUERUNG EINES FAHRZEUGS UNTER EINSCHRÄNKUNG, INSBESONDERE EINES BUSSES IN EINER LAGEREINRICHTUNG, UND VORRICHTUNG ZUR UMSETZUNG EINES SOLCHEN VERFAHRENS

METHOD FOR AUTOMATICALLY DRIVING A VEHICLE UNDER CONSTRAINT, IN PARTICULAR A BUS IN A STORAGE FACILITY, AND DEVICE IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2017 FR 1759456**

(43) Date de publication de la demande:
**19.08.2020 Bulletin 2020/34**

(73) Titulaire: **Commissariat à l'Énergie Atomique et aux Énergies Alternatives**
**75015 Paris (FR)**

(72) Inventeurs:
• **LUCET, Eric**
**75013 Paris (FR)**
• **MICAELLI, Alain**
**92260 Fontenay-aux-Roses (FR)**
• **RUSSOTTO, François-Xavier**
**92190 Meudon (FR)**

(74) Mandataire: **Marks & Clerk France**
**Immeuble "Visium"**
**22, avenue Aristide Briand**
**94117 Arcueil Cedex (FR)**

(56) Documents cités:
WO-A1-2017/077223        CN-A- 106 681 327
FR-A1- 3 038 279         US-A1- 2015 353 082

**Description**

La présente invention concerne un procédé de conduite automatique d'un véhicule sous contrainte. Elle concerne également un dispositif mettant en œuvre un tel procédé. Elle s'applique notamment pour la conduite automatique de bus à l'intérieur de centres de remisage.

L'utilisation de bus, pour les transports publics urbains ou les longs trajets, est stratégique dans l'économie des transports actuelle et future. Dans ce contexte un problème à régler concerne le remisage des bus en centre fermé, ce problème étant d'autant plus aigu que la place allouée est généralement limitée.

Ainsi, les centres de remisage, disposés sur plusieurs étages, présentent des zones de passage exiguës avec des emplacements de parking restreints. Cela engendre des cas de collision de bus avec l'infrastructure, quand ce n'est pas une collision entre bus. De ce fait, la vitesse en centre bus est généralement limitée à 8 km/h. En plus de ces accidents, les manœuvres nécessaires au parcage des bus et au retrait des bus génèrent des pertes de temps pour les conducteurs pris sur leur temps de travail.

Il y a donc un besoin d'automatisation de guidage de bus à l'intérieur d'un parking, au moins pour fiabiliser les manœuvres (éviter les accidents) et pour réduire les pertes de temps au parking.

A titre d'exemple, un tel guidage devrait aboutir au processus décrit sommairement ci-après.

Un chauffeur de bus qui commence sa journée de travail se présente à l'entrée du centre bus et, via une interface dédiée, sélectionne le bus avec lequel il souhaite travailler. Le bus garé dans le centre bus s'extrait de son emplacement et suit un itinéraire jusqu'à la sortie du centre bus où il s'arrête à un emplacement dédié, prêt à l'emploi. De même en fin de journée, le chauffeur qui finit sa journée de travail laisse le bus à un emplacement prévu à l'entrée du centre bus. Puis, le bus suit automatiquement un itinéraire jusqu'à la place de parking qui lui est attribuée.

Pour arriver à un tel guidage, il faut surmonter plusieurs obstacles et notamment en termes de précision de suivi de chemins qui peut présenter de fortes courbures, notamment en environnement contraint comme un centre de parking de bus par exemple.

La demande de brevet FR 1501414 divulgue un procédé de conduite automatique d'un véhicule mais n'est pas adapté pour ce type de guidage car il traite le suivi de tronçons de courbure nulle. Si on utilise ce procédé pour suivre des tronçons de courbure non nulle, c'est-à-dire des arcs de cercles, il subsiste une erreur latérale statique pendant le suivi du chemin. Ce procédé n'est donc pas adapté au guidage de bus dans un environnement contraint comme précisé précédemment.

Un document A. Micaelli and C. Samson, « Trajectory tracking for unicycle-type and two-steering-wheels mobile robots » Research Report RR-2097, INRIA, 1993, décrit notamment une loi de commande pour un suivi de courbure non nulle. La solution décrite dans ce document n'est cependant pas adapté au problème du guidage de bus dans un environnement contraint comme un centre de parking. En effet, dans ce cas, il est nécessaire de faire une commande de guidage prédictive pouvant prendre en compte des contraintes de commande et d'état en regard de l'environnement. En particulier, il faut garantir un écart faible du bus à sa trajectoire de référence sur un horizon de prédiction donné, tout le long de son parcours de navigation. Il faut également permettre des déplacements à vitesses positives et négatives, sans discontinuité lors de transitions entre vitesses positives et négatives via une vitesse nulle.

Un but de l'invention est notamment permettre à un bus ou autre véhicule de suivre tous types de chemins sous contrainte, avec une très bonne précision. A cet effet, l'invention a pour objet un procédé de conduite automatique d'un véhicule d'un premier endroit donné vers un deuxième endroit donné formant une position cible, ledit véhicule étant soumis à des glissements latéraux et/ou longitudinaux des roues avant et des roues arrière lors de ses déplacements, ledit procédé comportant au moins les phases suivantes :

- une première phase dans laquelle on génère une trajectoire à suivre en fonction de l'état dudit véhicule et de ladite position cible, ledit état étant défini par la position courante et l'orientation dudit véhicule, ladite trajectoire (33) étant découpée en une suite de tronçons dont le point de départ forme une position intermédiaire ;
- une deuxième phase dans laquelle, à la position intermédiaires courante dudit véhicule :

  ○ on définit une courbure pour chacun de $n$ prochains tronçons, ladite courbure variant d'un tronçon au suivant selon une fonction polynomiale de la courbure $c_{r_0}$ du tronçon à ladite position courante et de la courbure $c_{r_{n-1}}$ du $n^{ième}$ tronçon suivant ;
  ○ on prédit, avant que ledit véhicule engage un mouvement, si ladite trajectoire peut être suivie sur l'ensemble des $n$ prochains tronçons, en fonction de contraintes imposées et des glissements latéraux et/ou longitudinaux estimés ;

- une troisième phase dans laquelle, si ladite trajectoire peut-être suivie, on commande l'angle de braquage desdites roues avant et la vitesse linéaire de traction dudit véhicule en fonction de l'état dudit véhicule et des glissements latéraux et/ou longitudinaux pour rallier le centre de l'essieu desdites roues arrière sur ladite trajectoire ;

si la trajectoire ne peut être suivie, on effectue un nouvel alignement dudit véhicule vers ladite position cible et on génère une nouvelle trajectoire à suivre selon la première phase.

Dans un mode de mise en œuvre possible, à chacune desdites positions intermédiaires comprise entre la position dudit véhicule et ledit $n^{ième}$ tronçon on définit la courbure $c_{r_i}$ par :

$$c_{r_i} = \frac{2c_{r_0} + c_{r_{n-1}}}{3} \, ,$$

où $1 \le i \le n - 2$.

Dans un autre mode de mise en œuvre possible, à chacune desdites positions intermédiaires comprise entre la position dudit véhicule et ledit $n^{ième}$ tronçon on définit la courbure $c_{r_i}$ par

$$c_{r_i} = \frac{2c_{r_{n-1}} + c_{r_0}}{n-1} i + c_{r_0} \, ,$$

où $1 \le i \le n - 2$.

La loi de commande dudit angle de braquage $\beta_f$ des roues avant et arrière est par exemple obtenue selon un processus d'optimisation d'une fonction sous contrainte où la variable est un vecteur u composé de la dérivée par rapport à la distance $\beta'_f$ dudit angle de braquage, indépendamment du temps.

Avantageusement, dans un mode de mise en œuvre particulier, ladite loi de commande utilise un modèle cinématique dudit véhicule défini par l'ensemble des relations suivantes :

$$\begin{cases} \theta' & = & \frac{(1+l^2 c_r^2)}{l}(\beta_f - \beta_c) - c_r^2 y \\ y' & = & \theta \\ y'' & = & \theta' \\ y''' & = & \frac{(1+l^2 c_r^2)}{l}\beta'_f - c_r^2 y' \end{cases}$$

où :

- (.)′, (.)″, (.)‴ expriment respectivement les dérivées première, seconde et troisième par rapport à l'abscisse curviligne ;
- $\theta$ est l'erreur angulaire (rad) qui correspond à l'orientation dudit véhicule par rapport à la tangente au point référence de la trajectoire à suivre ;
- y est l'erreur latérale qui correspond à la projection du centre de la roue arrière dudit véhicule sur le point référence de la trajectoire à suivre ;
- $l$ est l'empattement dudit véhicule ;
- $c_r$ est la courbure de la trajectoire à suivre ;
- $\beta_f$ est l'angle de direction réel de l'essieu avant du véhicule, en tenant compte du glissement $\delta_f$ ;
- $\beta_c$ est l'angle de direction désiré de l'essieu avant du véhicule pour suivre une trajectoire de courbure $c_r$.

Un vecteur u est par exemple calculé pour chaque tronçon de ladite trajectoire.

Ladite contrainte est par exemple fonction desdites contraintes imposées dépendant de l'encombrement dudit véhicule.

L'état dudit véhicule et les glissements sont par exemple issus d'une observation de variables indépendantes de ladite trajectoire, lesdites variables étant :

- les vitesses de rotation moyennes $\omega_f$ et $\omega_r$ des roues avant et arrière ;
- les angles de direction desdites roues avant et arrière $\alpha_f$, $\alpha_r$ ;
- les dérivées par rapport au temps $\dot{\alpha}_f$, $\dot{\alpha}_r$ desdits angles ;
- la position ( $x_m$, $y_m$ ) et l'angle ($\theta_m$) d'un repère mobile (m) lié audit véhicule par rapport à un repère fixe (o).

Ledit véhicule peut notamment être un bus de transport public, ledit bus étant conduit automatiquement à l'intérieur d'un centre de remisage de bus.

L'invention a également pour objet un dispositif de contrôle de la conduite automatique d'un véhicule d'un premier endroit donné vers un deuxième endroit donné formant une position cible, ledit véhicule étant soumis à des glissements latéraux et/ou longitudinaux des roues avant et des roues arrière lors de ses déplacements, caractérisé en ce que ledit dispositif étant apte à être embarqué dans ledit véhicule et à être relié au moins, via des interfaces appropriées, à des capteurs proprioceptifs, des capteur extéroceptifs et des moteurs d'actionnement de la direction et de la traction dudit véhicule, il comporte un calculateur mettant en œuvre le procédé tel que décrit précédemment.

D'autres caractéristiques et avantages de l'invention apparaîtront à l'aide de la description qui suit, faite en regard de dessins annexés qui représentent :

- La figure 1, une illustration de la problématique du guidage d'un bus à l'intérieur d'un centre de remisage, comme un exemple d'application de l'invention ;
- La figure 2, un exemple d'architecture fonctionnelle du contrôle d'un véhicule, utilisée par l'invention ;
- La figure 3, un exemple de modèle cinématique utilisé par l'invention.

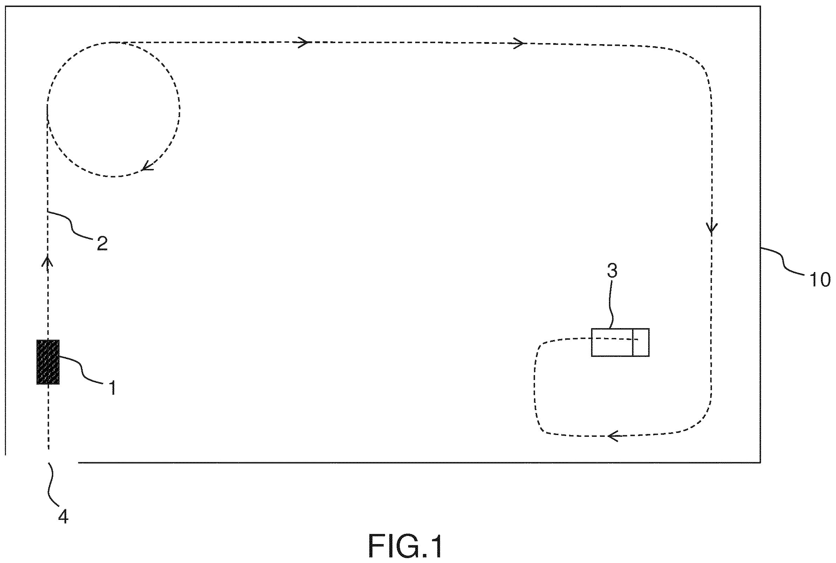

La figure 1 illustre la problématique du guidage d'un bus 1 dans un centre de remisage 10. Le trajet que le bus doit suivre, depuis l'entrée du centre, pour atteindre sa place de parking 3 est représenté par une ligne discontinue 2. Dans cet exemple, le bus doit suivre plusieurs courbes à fort rayon de courbure dans un espace réduit, en particulier une montée ou une descente en colimaçon pour passer d'un étage à l'autre et les virages successifs menant à la place de parking. Le trajet inverse est parcouru vers la sortie du centre qui correspond également, dans cet exemple, à l'entrée 4.

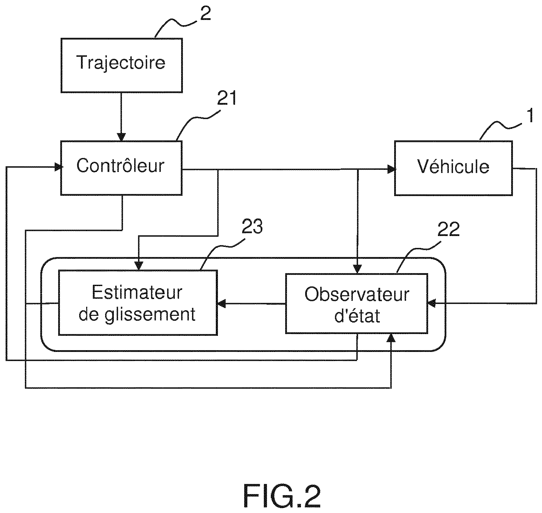

La figure 2 illustre l'architecture de contrôle de la trajectoire utilisée par le procédé selon l'invention. Cette architecture comporte au moins trois blocs:

- Un premier bloc 21 est destiné à la commande elle-même, il comporte un contrôleur construit sur la base d'un modèle cinématique du bus 1 à guider, ce modèle sera décrit par la suite ;
- Un deuxième bloc 22 formé d'un observateur de glissements basé sur un modèle 2D horizontal cinématique ou dynamique, corrigeant les valeurs de glissements pris en compte dans le modèle de commande ;
- Le troisième bloc 23 estime les glissements à partir des observations fournies par l'observateur 22.

Cette architecture de contrôle est la même que celle décrite dans la demande de brevet FR 1501414. En particulier, l'observateur d'état 22 et l'estimateur de glissements 23 sont les mêmes. Le modèle cinématique, décrit par la suite, est simplifié par rapport à celui du document FR 1501414. Un dispositif de contrôle selon l'invention incorpore donc ces trois blocs 21, 22, 23, ces blocs étant des fonctions réalisées par un calculateur mettant en œuvre les différentes phases du procédé selon l'invention.

Le dispositif de contrôle, fixé sur le bus, est relié via des interfaces appropriées à :

- Une source d'énergie assurant son alimentation électrique ;
- Un système de perception qui donne des informations de position et d'orientation par rapport à une station d'accueil, ce système étant notamment décrit dans la demande de brevet FR 1455049, la station d'accueil étant par exemple la place de parking 3 de la figure 1 ;
- Des moteurs d'actionnement de la direction et de la traction du bus que le contrôleur commande en angle de braquage et en vitesse linéaire de traction ;
- Des capteurs proprioceptifs du véhicule : des codeurs de mesure de l'angle des essieux de direction avant et arrière, des codeurs de mesures de la vitesse des essieux des roues avant et arrière et un capteur de distance indiquant la position verticale du véhicule, cette position étant par exemple indiquée par la mesure de distance entre un support et le sol.

On décrit par la suite les différents modèles cinématiques utilisés pour la commande 21 et l'observation 22. L'algorithme de commande est basé sur un modèle linéarisé.

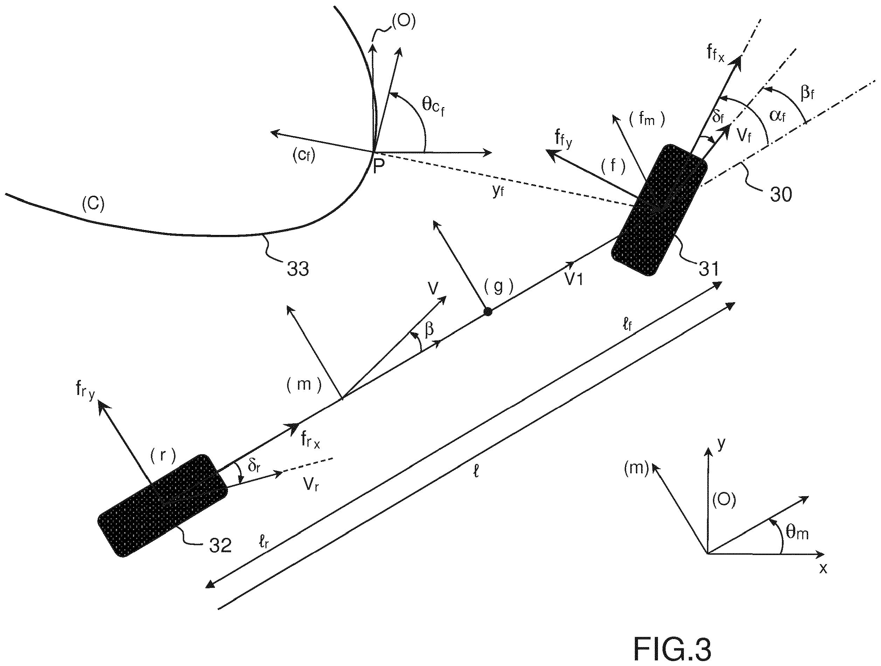

La figure 3 présente le modèle cinématique 2D du bus évoqué précédemment, en regard d'une trajectoire 33 construite en fonction d'un modèle prédictif et de la position courante du bus. Ce modèle cinématique est proche de celui décrit dans le document A. Micaelli and C. Samson, « Trajectory tracking for unicycle-type and two-steering-wheels mobile robots » et adapté à la situation de la figure 3.

Pour des raisons de simplification, une seule roue avant 31 représente l'ensemble des deux roues avant et de leur axe (essieu). De même, une seule roue arrière 32 représente l'ensemble des deux roues arrière et de leur axe (essieu). Un repère local ($f$) est lié aux roues avant et un repère local ($r$) est lié aux roues arrière.

Pour des raisons de clarté, le centre du repère local ($f$) n'a pas été représenté sur la trajectoire 33, au point P courant. Il en est de même pour le repère($r$).

Les roues avant 31 ont un vecteur vitesse $V_f$ faisant un angle $\delta_f$ par rapport à l'axe de direction des roues. Cet angle $\delta_f$ représente le glissement des roues au sol. Le vecteur vitesse $V_f$ fait un angle $\beta_f$ avec l'axe 30 du bus, égal à l'angle de direction $\alpha_f$ corrigé de l'angle de glissement $\delta_f$. Le guidage du bus s'effectue par les roues avant, selon l'angle de direction $\alpha_f$. L'angle $\beta_f$ exprime l'angle de braquage des roues avant.

Dans le cas des roues arrière 32, l'angle de direction $\alpha_r$ est nul. Il existe toujours un angle de glissement $\delta_r$, entre le vecteur vitesse des roues arrière $V_r$ et l'axe de direction 30.

Le vecteur vitesse résultant V du bus fait un angle $\beta$ par rapport à l'axe 30 du bus. Cet angle $\beta$ exprime le glissement résultant du véhicule, en l'absence de glissement $\beta = 0$.

La direction de l'axe 30 du véhicule est repérée dans un repère absolu (o) par un angle $\theta_m$. Cet angle $\theta_m$ représente également l'angle entre le repère mobile (m) lié au véhicule et le repère absolu (o).

Le centre de l'essieu des roues avant 31 fait un écart $y_f$, ou erreur latérale, avec la trajectoire de référence 33. Plus précisément, par un processus d'optimisation sous-contrainte, cet écart doit être réduit pour que le centre de l'essieu des roues 81 atteigne la trajectoire en un point P où un repère local tangentiel $c_f$ fait un angle $\theta_{Cf}$ avec le repère mobile (o), cet angle $\theta_{Cf}$ étant l'angle de la trajectoire de référence au point P. De même, le centre de l'essieu des roues arrière 32 doit rallier un point non représenté de la trajectoire 33.

Dans un but de simplification, le modèle cinématique choisi pour la synthèse de la commande résulte du choix suivant : le repère commandé est le repère (r) lié aux roues arrière 32, situé au centre de l'essieu de ces roues arrière. En d'autres termes, la commande cherche à faire converger ce repère sur la trajectoire 33.

Relativement à la figure 3, on fait l'hypothèse que les angles $\delta_f$, $\delta_r$ sont petits, de manière à ce qu'ils soient assimilés à une variation des angles de direction $\alpha_f$, $\alpha_r$. Afin d'exprimer les équations mathématiques, on part du torseur cinématique vitesse du repère (f) et du torseur cinématique vitesse du repère (r), notés respectivement $\mathbf{T}_f$ et $\mathbf{T}_r$ :

$$\mathbf{T}_f = \begin{bmatrix} \dot{\theta}_m + \dot{\beta}_f \\ v_f \\ 0 \end{bmatrix}, \ \mathbf{T}_r = \begin{bmatrix} \dot{\theta}_m \\ v_r \\ 0 \end{bmatrix} \qquad (1)$$

$\dot{\theta}_m$ étant la vitesse de rotation du mobile, $v_f$ et $v_r$ étant respectivement la projection des vecteurs vitesses $V_f$ et $V_r$ sur l'axe $f_{fx}$ du repère (f) et sur l'axe $f_{rx}$ du repère (r).

Par ailleurs, les torseurs cinématiques des repères (f) et (r) relativement au corps du mobile et exprimés dans le repère (m) lié au mobile, le bus en particulier, sont notés $\mathbf{T}_{f/m}$ et $\mathbf{T}_{r/m}$ et ainsi formulés :

$$\mathbf{T}_{f/m} = \begin{bmatrix} \dot{\beta}_f \\ 0 \\ 0 \end{bmatrix}, \ \mathbf{T}_{r/m} = \begin{bmatrix} 0 \\ 0 \\ 0 \end{bmatrix} \qquad (2)$$

Les torseurs définis par la relation (1) ne sont pas indépendants. La combinaison des relations (1) et (2) permet de lier $v_f$ et $v_r$ ainsi que d'obtenir une expression de la vitesse de rotation $\dot{\theta}_m$ du mobile, soit :

$$\mathbf{T}_m = {}^m\mathbf{Ad}_f \left( \mathbf{T}_f - \mathbf{T}_{f/m} \right) = {}^m\mathbf{Ad}_r \mathbf{T}_r \qquad (3)$$

avec :

- 
$${}^m\mathbf{Ad}_{f,r} = \begin{bmatrix} 1 & 0_{1\times 2} \\ -{}^m\mathbf{t}_{\perp f,r} & {}^m\mathbf{R}_{f,r} \end{bmatrix};$$

- ${}^m\mathbf{t}_{f,r}$, représente repectivement les vecteurs mf et mr exprimé dans le repère (m);
- ${}^m\mathbf{t}_{\perp f,r}$ est le vecteur obtenu par rotation de $\frac{\pi}{2}$ du vecteur ${}^m\mathbf{t}_{f,r}$;
- ${}^m\mathbf{R}_{f,r}$ est une matrice de rotation exprimant respectivement l'orientation des repères (f) et (r) dans le repère (m).

Ainsi, il vient :

$$^{m}\mathbf{Ad}_f = \begin{bmatrix} 1 & 0 & 0 \\ 0 & \cos\beta_f & -\sin\beta_f \\ -l_f & \sin\beta_f & \cos\beta_f \end{bmatrix} ; \quad ^{m}\mathbf{Ad}_r = \begin{bmatrix} 1 & 0 & 0 \\ 0 & 1 & 0 \\ -l_r & 0 & 1 \end{bmatrix}$$

D'où :

$$\mathbf{T}_m = \begin{bmatrix} \dot{\theta}_m \\ v_f \cos\beta_f \\ -l_f \dot{\theta}_m + v_f \sin\beta_f \end{bmatrix} = \begin{bmatrix} \dot{\theta}_m \\ v_r \\ -l_r \dot{\theta}_m \end{bmatrix}$$

Conduisant à la vitesse de rotation selon la relation suivante :

$$\begin{cases} \dot{\theta}_m = \dfrac{\sin\beta_f}{l_f - l_r} v_f = \dfrac{\tan\beta_f}{l_f - l_r} v_r \\ v_r = v_f \cos\beta_f \end{cases}$$

Après les équations d'évolution du modèle, on traite ci-après la poursuite e trajectoire.

Pour chacun des repères (f) et (r), on considère la projection sur la trajectoire et le repère associé, respectivement le repère (c$_f$) et le repère (c$_r$), non représenté. Relativement à ces repères, l'évolution de repère (f) et du repère (r) est donnée par :

$$^{f}\mathbf{T}_{f/c_f} = \mathbf{T}_f - {}^{f}\mathbf{Ad}_{c_f}\mathbf{T}_{c_f}, \quad ^{r}\mathbf{T}_{r/c_r} = \mathbf{T}_r - {}^{r}\mathbf{Ad}_{c_r}\mathbf{T}_{c_r} \qquad (4)$$

avec :

•
$$^{f,r}\mathbf{Ad}_{c_{f,r}} = \begin{bmatrix} 1 & 0_{1\times 2} \\ -^{f,r}\mathbf{t}_{\perp c_{f,r}} & {}^{f,r}\mathbf{R}_{c_{f,r}} \end{bmatrix} ;$$

•
$$^{f,r}\mathbf{t}_{c_{f,r}} = -^{f,r}\mathbf{R}_{c_{f,r}} \begin{bmatrix} 0 \\ c_{f,r}y_{f,r} \end{bmatrix} ;$$

•
$$^{f,r}\mathbf{R}_{c_{f,r}} = \begin{bmatrix} \cos\left(\theta_m - \theta_{c_{f,r}} + \beta_{f,r}\right) & \sin\left(\theta_m - \theta_{c_{f,r}} + \beta_{f,r}\right) \\ -\sin\left(\theta_m - \theta_{c_{f,r}} + \beta_{f,r}\right) & \cos\left(\theta_m - \theta_{c_{f,r}} + \beta_{f,r}\right) \end{bmatrix} ;$$

•
$$\mathbf{T}_{c_{f,r}} = \begin{bmatrix} c_{f,r}\dot{s}_{f,r} \\ \dot{s}_{f,r} \\ 0 \end{bmatrix} ,$$

avec $s_{f,r}$ et $c_{f,r}$ abscisses curvilignes et courbures associées à la trajectoire en (c$_f$) et (c$_r$) respectivement.

En particulier au niveau de l'essieu des roues avant :

$$^{f}\mathbf{t}_{c_f} = {}^{f}\mathbf{R}_{c_f} \begin{bmatrix} 0 \\ -^{c_f}y_f \end{bmatrix} = \begin{bmatrix} ^{c_f}y_f \sin(\theta_{c_f} - \theta_f) \\ -^{c_f}y_f \cos(\theta_{c_f} - \theta_f) \end{bmatrix} \text{ et } -\mathbf{J}^{f}\mathbf{t}_{c_f} = \begin{bmatrix} -^{c_f}y_f \cos(\theta_{c_f} - \theta_f) \\ -^{c_f}y_f \sin(\theta_{c_f} - \theta_f) \end{bmatrix} ,$$
$$\theta_f = \theta_m + \beta_f.$$

avec

D'où :

$$^f\mathbf{Ad}_{c_f} = \begin{bmatrix} 1 & 0 & 0 \\ -{}^{c_f}y_f\cos(\theta_{c_f}-\theta_f) & \cos(\theta_{c_f}-\theta_f) & -\sin(\theta_{c_f}-\theta_f) \\ -{}^{c_f}y_f\sin(\theta_{c_f}-\theta_f) & \sin(\theta_{c_f}-\theta_f) & \cos(\theta_{c_f}-\theta_f) \end{bmatrix}$$

Ainsi :

$$^f\mathbf{T}_{f/c_f} = \begin{bmatrix} \dot{\theta}_m - c_f\dot{s}_f + \dot{\beta}_f \\ v_f + y_f\cos(\theta_{c_f}-\theta_f)c_f\dot{s}_f - \cos(\theta_{c_f}-\theta_f)\dot{s}_f \\ 0 + y_f\sin(\theta_{c_f}-\theta_f)c_f\dot{s}_f - \sin(\theta_{c_f}-\theta_f)\dot{s}_f \end{bmatrix}$$

Or

$$^{c_f}\mathbf{T}_{f/c_f} = {}^{c_f}\mathbf{Ad}_f^f\mathbf{T}_{f/c_f}$$

On a :

$$^f\mathbf{R}_{c_f}^t{}^f\mathbf{t}_{c_f} = \begin{bmatrix} -\cos(\theta_{c_f}-\theta_f) & -\sin(\theta_{c_f}-\theta_f) \\ \sin(\theta_{c_f}-\theta_f) & -\cos(\theta_{c_f}-\theta_f) \end{bmatrix}\begin{bmatrix} {}^{c_f}y_f\cos(\theta_{c_f}-\theta_f) \\ {}^{c_f}y_f\sin(\theta_{c_f}-\theta_f) \end{bmatrix} = \begin{bmatrix} -{}^{c_f}y_f \\ 0 \end{bmatrix};$$

et donc :

$$^{c_f}\mathbf{Ad}_f = {}^f\mathbf{Ad}_{c_f}^{-1} = \begin{bmatrix} 1 & 0 & 0 \\ -{}^{c_f}y_f & \cos(\theta_{c_f}-\theta_f) & \sin(\theta_{c_f}-\theta_f) \\ 0 & -\sin(\theta_{c_f}-\theta_f) & \cos(\theta_{c_f}-\theta_f) \end{bmatrix}.$$

Soit dans le repère ( $c_f$ ) :

$$\dot{\theta}_{f/c_f} = \dot{\theta}_m - c_f\dot{s}_f + \dot{\beta}_f \;;\; \dot{x}_{f/c_f} = v_f\cos(\theta_{c_f}-\theta_f) - \dot{s}_f - {}^{c_f}y_f(\dot{\theta}_m + \dot{\beta}_f - 2c_f\dot{s}_f).$$

D'où :

$$\dot{x}_{f/c_f} = v_f\cos(\theta_{c_f}-\theta_f) - \dot{s}_f\left(1 - c_f^{c_f}y_f\right) - {}^{c_f}y_f\dot{\theta}_{f/c_f}.$$

Et :

$$\dot{y}_{f/c_f} = -v_f\sin(\theta_{c_f}-\theta_f).$$

En écrivant la vitesse relative $^f\boldsymbol{T}_{f/cf}$ dans le repère ($c_f$) sans transport, c'est-à-dire en multipliant la vitesse de translation par la matrice $^f\boldsymbol{R}_{cf}^t$ , on obtient :

$$\begin{cases} \dot{\theta}_{f/c_f} &= \frac{\sin\beta_f}{l}v_f + \dot{\beta}_f - c_f\dot{s}_f \\ 0 &= v_f\cos\left(\theta_f - \theta_{c_f}\right) - \dot{s}_f(1 - c_f{}^{c_f}y_f) \\ \dot{y}_{f/c_f} &= v_f\sin\left(\theta_f - \theta_{c_f}\right) \end{cases} \qquad (5)$$

De même, on exprime $^fT_{f/cr}$ dans le repère ($c_r$) :

$$\begin{cases} \dot{\theta}_{r/c_r} &= \frac{\tan\beta_f}{l}v_r - c_r\dot{s}_r \\ 0 &= v_r\cos(\theta_r - \theta_{c_r}) - \dot{s}_r(1 - c_r{}^{c_r}y_r) \\ \dot{y}_{r/c_r} &= v_r\sin(\theta_r - \theta_{c_r}) \end{cases} \qquad (6)$$

On décrit ci-après le modèle linéaire.

La trajectoire de navigation considérée est un cercle de courbure $C_r$ constante. Les modèles qui précèdent sont alors linéarisés autour de l'état d'équilibre :

- $\theta_r = \theta_{c_r}$ ;
- $y_{r/c_r} = 0$ ;
- $\tan\beta_f = lc_r = \tan\beta_c$.

En considérant la loi de décomposition d'une fonction en série de Taylor :

$$f(x) = \sum_i \frac{f^{(i)}(x_0)}{i!}(x - x_0)^i$$

il vient, pour la fonction tangente :

$$\tan(x) \approx \tan\beta_c + (1 + \tan^2\beta_c)(x - \beta_c) + \tan\beta_c(1 + \tan^2\beta_c)(x - \beta_c)^2$$

Il s'ensuit, qu'en posant :

- $$\theta = \theta_r - \theta_{c_r} ;$$

- $v = v_r$ ;
- $$y = y_{r/c_r}.$$

la linéarisation des relations (6) conduit aux relations suivantes :

$$\dot{s}_r = \frac{v\cos\theta}{1 - c_r y} \approx \frac{v}{1 - c_r y} ;$$

$$\dot{y} = v\sin\theta \approx v\theta = (1 - c_r y)\dot{s}_r\theta ;$$

$$\dot{\theta} = \left[lc_r + (1 + l^2 c_r^2)(\beta_f - \beta_c)\right]\frac{v}{l} - c_r\dot{s}_r ;$$

$$\dot{\theta} = \left[lc_r + (1 + l^2 c_r^2)(\beta_f - \beta_c)\right]\frac{(1 - c_r y)\dot{s}_r}{l} - c_r\dot{s}_r.$$

Puis en considérant $y' = \frac{dy}{ds} = \frac{dy}{dt}\frac{dt}{ds} = \frac{\dot{y}}{\dot{s}}$ et en supprimant les termes deux fois petits comme $y(\beta_f - \beta_c)$ on obtient le modèle cinématique défini par l'ensemble des relations suivantes :

$$\begin{cases} \theta' &= \frac{(1+l^2 c_r^2)}{l}(\beta_f - \beta_c) - c_r^2 y \\ y' &= \theta \\ y'' &= \theta' \\ y''' &= \frac{(1+l^2 c_r^2)}{l}\beta_f' - c_r^2 y' \end{cases} \qquad (7)$$

où :

- (. )', (. )", (. )''' expriment respectivement les dérivées première, seconde et troisième par rapport à l'abscisse curviligne, $\theta$ étant la dérivée première de $\theta$, et $y'$, $y''$, $y'''$ étant respectivement les dérivées première, seconde et troisième de y ;
- $\theta = \theta_r - \theta_{cr}$ est l'erreur angulaire (en radians) qui correspond à l'orientation du véhicule par rapport à la tangente au point référence de la trajectoire à suivre ;
- $y = y_{r/cr}$ est l'erreur latérale (m) qui correspond à la projection du centre de la roue arrière du véhicule sur le point référence de la trajectoire à suivre ;
- $l$ est l'empattement du véhicule ;
- $c_r$ est la courbure de la trajectoire à suivre ;
- $\beta_f$ est l'angle de direction réel de l'essieu avant du véhicule, en tenant compte du glissement $\delta_f$ ;
- $\beta_c$ est l'angle de direction désiré de l'essieu avant du véhicule pour suivre une trajectoire de courbure $c_r$.

$$\boldsymbol{y} = \begin{bmatrix} y \\ y' \\ y'' \end{bmatrix}$$

En considérant les vecteurs d'état : $\quad$ où l'exposant « ' » exprime une dérivation par rapport à l'abscisse curviligne comme indiqué ci-dessus ;

$$\text{et } \boldsymbol{x} = \begin{bmatrix} y \\ \theta \\ \beta_f - \beta_c \end{bmatrix}$$

on obtient le modèle linéarisé suivant :

$$\begin{cases} \mathbf{y} &= \begin{bmatrix} 1 & 0 & 0 \\ 0 & 1 & 0 \\ -c_r^2 & 0 & \frac{1+l^2 c_r^2}{l} \end{bmatrix} \mathbf{x} &= \mathbf{P}\mathbf{x} \\ \mathbf{y}' &= \begin{bmatrix} 0 & 1 & 0 \\ 0 & 0 & 1 \\ 0 & -c_r^2 & 0 \end{bmatrix} \mathbf{y} + \begin{bmatrix} 0 \\ 0 \\ \frac{1+l^2 c_r^2}{l} \end{bmatrix} \beta_f' &= \mathbf{A}\mathbf{P}^{-1}\mathbf{y} + \mathbf{B}u \end{cases} \qquad (8)$$

Afin de prendre en compte des contraintes fortes d'accessibilité pendant la navigation en centre bus, le procédé selon l'invention utilise une commande prédictive. Il s'agit d'une commande prédictive discrète qui s'appuie sur le modèle discret associé aux relations (8). Cette commande prédictive optimise un critère fonction des états prédits et des commandes futures sur une fenêtre spatiale de longueur $n_{step}S$ en garantissant si possible un certain nombre de contraintes sur l'état (un gabarit admissible) et la commande (contraintes de vitesse d'orientation du train directeur).

Compte-tenu de (8), les matrices d'état du système continu sont :
$\mathbf{A}_c = \mathbf{A}\mathbf{P}^{-1}$ et $\mathbf{B}_c = \mathbf{B}$

La solution de l'équation différentielle $\mathbf{y}' = \mathbf{A}_c\,\mathbf{y} + \mathbf{B}_c\,u$ est $y(s) = y_0 e^{A_c s} + \int_0^S e^{A_c(s-\tau)} \boldsymbol{B}_c\,u(\tau)d\tau$.

Pour cela, on suppose $\mathbf{A}_c$ et $\mathbf{B}_c$ constants par rapport à l'abscisse curviligne s. On conserve cette hypothèse sur chaque petit intervalle de distance S, les matrices $\mathbf{A}_{ck}$ et $\mathbf{B}_{ck}$ étant fonction de l'abscisse curviligne $c_{rk}$ et constantes sur un pas S.

En effectuant une discrétisation suivant l'abscisse curviligne selon le pas S, les matrices d'état du système

discret :

$Y_{k+1} = A_{dk} y_k + B_{dk} u_k$ (k étant compris entre 1 et N, où N est le nombre d'intervalles) sont données par :

$$\begin{cases} A_{d_k} & = & e^{A_{c_k}S} & = & I_3 + S A_{c_k} + \frac{S}{2} A_{c_k}^2 + \cdots + \frac{S^i}{i!} A_{c_k}^i + \cdots \\ B_{d_k} & = & e^{A_{c_k}S} \int_0^S e^{-A_{c_k}\tau} d\tau \, B_{c_k} & = & e^{A_{c_k}S} \frac{(e^{-A_{c_k}S} - I_3)}{-A_{c_k}} B_{c_k} = \frac{B_{c_k}}{A_{c_k}}(A_{d_k} - I_3) \end{cases} \qquad (9)$$

L'entrée $u_k$ est supposée constante sur les pas de distance $S$. Si on envisage des déplacements en marche avant et arrière, ces calculs doivent être effectués pour $S > 0$ et $S < 0$.

Après cette étape de discrétisation, on calcule des états prédits. Les états prédits sont calculés en partant de la connaissance de l'état courant $y_0$ et en utilisant les matrices $A_{dk}$ et $B_{dk}$ calculées précédemment. En effectuant une récurrence sur $n$ pas, on obtient :

$$\begin{cases} y_1 & = & A_{d_0} y_0 + B_{d_0} u_0 \\ y_2 & = & A_{d_1} A_{d_0} y_0 + A_{d_1} B_{d_0} u_0 + B_{d_1} u_1 \\ y_3 & = & A_{d_2} A_{d_1} A_{d_0} y_0 + A_{d_2} A_{d_1} B_{d_0} u_0 + A_{d_2} B_{d_1} u_1 + B_{d_2} u_2 \\ & & etc. \end{cases}$$

Soit, sous forme matricielle :

$$\begin{bmatrix} y_1 \\ y_2 \\ \vdots \\ y_n \end{bmatrix} = \begin{bmatrix} A_{d_0} \\ A_{d_1} A_{d_0} \\ \vdots \\ A_{d_{n-1}} \cdots A_{d_0} \end{bmatrix} y_0 + \begin{bmatrix} B_{d_0} & 0_{3\times 1} & \cdots & 0_{3\times 1} \\ A_{d_1} B_{d_0} & B_{d_1} & \ddots & \vdots \\ \vdots & \vdots & \ddots & 0_{3\times 1} \\ A_{d_{n-1}} \cdots A_{d_1} B_{d_0} & A_{d_{n-1}} \cdots A_{d_2} B_{d_1} & \cdots & B_{d_{n-1}} \end{bmatrix} \begin{bmatrix} u_0 \\ u_1 \\ \vdots \\ u_{n-1} \end{bmatrix}$$
$$(10)$$

et de manière plus synthétique, on obtient l'état prédit **Y** fonction de l'état courant $y_0$ et de la commande future **U** soit :

$$Y = \mathcal{A} y_0 + \mathcal{B} U \qquad (11)$$

Le critère à optimiser est une fonction quadratique de l'état prédit **Y** et de la commande future **U.** Selon l'invention ce critère, noté *crit* est exprimé comme suit :

$$crit = \frac{1}{2} Y^t \, \mathcal{Q} \, Y + \frac{1}{2} U^t \, \mathcal{R} \, U \qquad (12)$$

où $\mathcal{Q}$ et $\mathcal{R}$ sont des matrices de pondération de dimension 3n $\times$ 3n et nxn respectivement pour l'état et pour la commande. Elles sont choisies de structure bloc-diagonale d'éléments génériques $\gamma_Q^k \mathbf{Q}_{3\times 3}$ et $\gamma_R^k \mathbf{R}_{1\times 1}$ où $\gamma_Q^k$ et $\gamma_R^k$, compris entre 0 et 1, sont des facteurs d'oubli, $k$ étant le rang dans la diagonale et les matrice **Q** et **R** étant des matrices de réglage définies positives.

L'expression du critère, uniquement en fonction des inconnues indépendantes, c'est-à-dire en fonction de U est de la forme :

$$crit = \frac{1}{2} U^t \, (\mathcal{B}^t \mathcal{Q} \mathcal{B} + \mathcal{R}) \, U + y_0 \mathcal{A}^t \, \mathcal{Q} \mathcal{B} U \qquad (13)$$

d'où on extrait la constant dépendant uniquement de $y_0$.

On donne ci-après l'expression des contraintes sur l'état pour un gabarit donné a priori. Ces contraintes sont fonction de l'environnement dans lequel évolue le bus guidé, par exemple la structure d'un centre de remisage, ainsi que des dimensions du bus. De manière simpliste, dans un premier temps, on assimile le bus à un rectangle dont les extrémités avant et arrière sont respectivement situées à un point $Df$ et à un point $Dr$ de l'axe de direction du train avant suivant l'axe longitudinal 30. On pose comme contrainte que ces extrémités restent dans une tolérance $\delta_{gap}$ autour de la trajectoire. Cette contrainte peut s'écrire ainsi :

$$\begin{cases} \left| y - D_r \sin(\theta_m - \theta_c) \right| < \delta_{gap} \\ \left| y + D_f \sin(\theta_m - \theta_c) \right| < \delta_{gap} \end{cases}$$

Ces relations peuvent encore s'exprimer comme suit, en linéarisant et en posant $\theta = \theta_m - \theta_c$ :

$$- \begin{bmatrix} \delta_{gap} \\ \delta_{gap} \end{bmatrix} \leq \begin{bmatrix} 1 & -D_r & 0 \\ 1 & D_f & 0 \end{bmatrix} \mathrm{x} \leq \begin{bmatrix} \delta_{gap} \\ \delta_{gap} \end{bmatrix} \qquad (14)$$

En posant :

$$\mathbf{D} = \begin{bmatrix} 1 & -D_r & 0 \\ 1 & D_f & 0 \\ -1 & D_r & 0 \\ -1 & -D_f & 0 \end{bmatrix} \mathbf{P}^{-1}$$

et en posant d = $\delta_{gap}\, 1_{4 \times 1}$ ;
la contrainte peut s'exprimer par la relation suivante :

$$\mathbf{Dy} + \mathbf{d} \geq Q_{4x1} \qquad (15)$$

Etendue à tout l'état prédit et exprimée en fonction des commandes futures, cette contrainte devient :

$$\mathfrak{D}\mathcal{B}\mathrm{U} + \eth_{gap} + \mathcal{A}\mathrm{y}_0 \geq 0_{4n \times 1} \qquad (16)$$

avec :

- $\mathfrak{D}$, la matrice bloc diagonale formée de $n$ blocs **D** ;
- et $\eth_{gap} = \delta_{gap} \mathbb{1}_{4n \times 1}$ .

L'obtention du vecteur de commande U s'obtient par la résolution de l'équation quadratique suivante :

$$\begin{cases} \min_U \dfrac{1}{2} \mathrm{U}^t \left( \mathcal{B}^t \mathcal{Q}\mathcal{B} + \mathcal{R} \right) \mathrm{U} + \mathrm{y}_0 \mathcal{A}^t \mathcal{Q}\mathcal{B}\mathrm{U} \\ \mathfrak{D}\mathcal{B}\mathrm{U} + \eth_{gap} + \mathcal{A}\mathrm{y}_0 \geq 0_{4n \times 1} \end{cases} \qquad (17)$$

On extrait ensuite le premier élément $\beta'_f = u_0$ du vecteur **U.** La commande est alors donnée par l'angle de braquage des roues avant : $\dot{\beta}_f = v_f u_0$.

On décrit maintenant les phases de mise en œuvre du procédé selon l'invention qui appliquent par exemple la prédiction de trajectoire et de commande décrites précédemment. Les étapes de la demande de brevet FR 1501414 sont reprises mais de manière différente, en particulier la trajectoire n'est plus découpée selon des tronçons rectilignes mais selon des tronçons de courbure non nulle, en utilisant avantageusement une courbure fictive en fonction de la courbure réelle de la trajectoire à suivre, afin de mettre en œuvre la commande avec une courbure à variation plus progressive, comme cela sera décrit par la suite.

Le procédé selon l'invention comporte ainsi les phases décrites ci-après. Ces phases sont répétées tout au long du parcours en fonction du résultat de la prédiction.

Dans une première phase on génère la trajectoire 33 à suivre pour engager le bus vers sa place de parking 3, en fonction de l'état du véhicule et de cette place parking qui est la position cible. Si on considère l'exemple de la figure 1, la trajectoire commence à l'entrée 4 du centre de remisage. Le procédé selon l'invention s'applique aussi pour l'extraction du bus de sa place de parking pour le conduire vers l'entrée 4 du centre de remisage. Dans ce cas, la position cible est par exemple cette entrée 4. L'état du bus en fonction duquel la trajectoire est générée est la position courante du bus et son orientation (définie par l'orientation de l'axe 30 du bus). La trajectoire est découpée en tronçons.

Dans une deuxième phase pour chaque position intermédiaire du bus (correspondant à un début de tronçon) on définit une courbure fictive non nulle pour un ensemble de $n$ tronçons suivants, formant l'horizon sur lequel s'effectue la prédiction. La courbure varie progressivement d'un tronçon au suivant. Des exemples de définition de courbures seront donnés par la suite. Puis, avant que le bus engage un mouvement, on prédit au départ de chaque tronçon si la trajectoire peut être suivie en fonction d'une part des contraintes d'encombrement (par exemple celles rencontrées sur le parcourt à l'intérieur du centre remisage) ou des contraintes de limitation de vitesse des actionneurs des roues imposées et d'autre part des glissements latéraux et/ou longitudinaux estimés.

Dans une troisième phase, si la prédiction indique que la trajectoire peut être suivie, on commande l'angle de braquage des roues avant 31 et la vitesse linéaire de traction du bus en fonction de l'état du bus et des glissements latéraux et/ou longitudinaux, pour rallier le centre de l'essieu des roues arrière 32 sur la trajectoire 33. La commande appliquée est par exemple celle décrite précédemment relativement au modèle cinématique retenu pour le bus.

Les deuxième et troisième phases sont répétées tant que la trajectoire peut être suivie. Si le résultat de la prédiction est que la trajectoire ne peut être suivie, on effectue un nouvel alignement du bus vers la position cible et on génère une nouvelle trajectoire selon la première phase.

Dans ce parcourt le long de la trajectoire 33, le bus peut effectuer son déplacement en marche avant ou en marche arrière.

On décrit maintenant la nature des tronçons de trajectoire sur lesquels s'effectue la prédiction.

Lorsqu'on linéarise le modèle cinématique du bus autour d'un tronçon de courbure $c_r$, on suppose a priori un angle de direction avant $\beta_f$ nominal configuré pour la courbure correspondante. Il y a, en conséquence, un saut en angle de direction dans la prédiction. Si ce saut est trop important, il n'est pas réalisable en situation réelle.

Selon l'invention, une solution à ce problème est de modifier artificiellement la valeur de la courbure $c_r$ sur tout l'horizon de prédiction $n$, de façon à obtenir une variation progressive au changement de tronçon. Le nombre $n$ indique le nombre de tronçons à parcourir sur l'horizon de prédiction.

Le bus étant à l'instant courant au départ d'un tronçon de courbure $c_{r_0}$ et devant atteindre à son horizon $n$ un tronçon de courbure $c_{r_{n-1}}$, à toutes les positions intermédiaires on définit la courbure $c_{r_i}$ par un des polynômes suivants : où $1 \leq i \leq n - 2$

- $$c_{r_i} = \frac{2c_{r_0} + c_{r_{n-1}}}{3}$$ , ce premier polynôme étant une première approximation efficace, afin d'anticiper un tiers de la courbure en fin de l'horizon de prédiction ;

- $$c_{r_i} = \frac{2c_{r_{n-1}} + c_{r_0}}{n-1} i + c_{r_0}$$ , ce deuxième polynôme permettant une progression linéaire entre $c_{r_0}$ et $c_{r_{n-1}}$.

Les positions intermédiaires définies ci-dessous correspondent aux départs des tronçons successifs de la trajectoire.

D'autres choix sont possibles, notamment des polynômes plus complexes de degrés supérieurs. Selon les cas, le rapport entre la valeur de l'horizon de prédiction $nS$ et la taille des tronçons de la trajectoire est à considérer. En effet, dans le cas où l'horizon de prédiction $nS$ est petit devant la taille des tronçons, cette méthode assurant une redéfinition de chacune des courbures intermédiaires $c_{r_i}$ est la plus pertinente, dans la mesure où elle est comparable à une subdivision virtuelle de ceux-ci. En revanche, dans le cas où l'horizon de prédiction $nS$ devient significatif par rapport à la taille des tronçons une variation virtuelle des valeurs de courbures n'est pas toujours nécessaire. Si toutefois une telle variation est nécessaire, il faut s'assurer que toute nouvelle valeur de courbure virtuelle ne dénature pas la trajectoire, en restant toujours comprise entre la valeur réelle et la valeur réelle différente suivante.

En ce qui concerne la caractérisation de la trajectoire, celle-ci est définie a minima sous une forme géométrique paramétrée $\mathbf{x}(u)$ par un paramètre $u$. On fait l'hypothèse que la fonction $\mathbf{x}(.)$ est $C^3$ par morceaux. Cette expression permet de déduire toutes les caractéristiques souhaitées de la trajectoire, en termes de tangente, normale, courbure et variation de courbure, soit :

$$\begin{cases} \mathbf{t}_x & = & \dfrac{\mathbf{x}'_u}{\|\mathbf{x}'_u\|} \\[2mm] \mathbf{n}_x & = & \mathbf{t}_{\perp x} \\[2mm] c_x & = & \dfrac{\det\left(\mathbf{x}'_u, \mathbf{x}''_u\right)}{\|\mathbf{x}'_u\|^3} \\[2mm] g_x & = & \dfrac{\det\left(\mathbf{x}'_u, \mathbf{x}'''_u \|\mathbf{x}'_u\|^2 - 3\left(\mathbf{x}'^t_u \mathbf{x}''_u\right)\mathbf{x}''_u\right)}{\|\mathbf{x}'_u\|^6} \end{cases} \qquad (18)$$

où :

- $(.\,)'_u$, $(.\,)''u$ et $(.\,)'''u$ définissent respectivement une dérivation suivant u à l'ordre un, deux et trois ;
- et $(a, b) = a^t_{\perp} b$.

Dans le cas où u varie comme l'abscisse curviligne s, on a $\| x'_u \| = 1$, et les équations (18) se simplifient en :

$$\begin{cases} \mathbf{t}_x & = & \mathbf{x}'_s \\[1mm] \mathbf{n}_x & = & \mathbf{t}_{\perp x} \\[1mm] c_x & = & \det\left(\mathbf{x}'_s, \mathbf{x}''_s\right) \\[1mm] g_x & = & \det\left(\mathbf{x}'_s, \mathbf{x}'''_s\right) \end{cases} \qquad (19)$$

Classiquement, la trajectoire du bus est définie comme une succession de segments et d'arcs de cercles, la position du bus sur cette trajectoire variant en fonction d'une abscisse curviligne s.Un problème possible est que la loi de commande mise en place tend en priorité à conserver une erreur nulle sur un tronçon parcouru, y compris à la fin de ce tronçon, même dans le cas d'une forte variation de la valeur de la courbure au tronçon suivant. Cela induit des erreurs au moment du changement de tronçon, liées notamment aux limitations des actionneurs des essieux. Afin de limiter ce phénomène, en fonction de la taille des tronçons et de la variation de leur courbure, tout couple de deux tronçons successifs ayant une variation importante de courbure est subdivisé en plusieurs tronçons de tailles inférieures afin d'avoir une variation minime de la courbure.

Parmi d'autres avantages, le procédé selon l'invention permet à un bus de suivre tous types de trajectoires ou de chemins, avec une très bonne précision sur tous types de géométrie de tronçons, y compris aux transitions entre les tronçons.

L'invention a été décrite pour conduire un bus, elle peut bien sûr s'appliquer pour d'autres types de véhicules.

**Revendications**

1. Procédé de conduite automatique d'un véhicule d'un premier endroit donné (4, 3) vers un deuxième endroit donné (3, 4) formant une position cible, ledit véhicule étant soumis à des glissements latéraux et/ou longitudinaux des roues avant (31) et des roues arrière (32) lors de ses déplacements, **caractérisé en ce qu'**il comporte au moins les phases suivantes :

   - une première phase dans laquelle on génère une trajectoire (33) à suivre en fonction de l'état dudit véhicule et de ladite position cible, ledit état étant défini par la position courante et l'orientation dudit véhicule, ladite trajectoire (33) étant découpée en une suite de tronçons dont le point de départ forme une position intermédiaire ;
   - une deuxième phase dans laquelle, à la position intermédiaires courante dudit véhicule :

     ∘ on définit une courbure pour chacun de $n$ prochains tronçons, ladite courbure variant d'un tronçon au suivant selon une fonction polynomiale de la courbure $c_{r_0}$ du tronçon à ladite position courante et de la courbure $c_{r_{n-1}}$ du $n^{ième}$ tronçon suivant ;
     ∘ on prédit, avant que ledit véhicule engage un mouvement, si ladite trajectoire peut être suivie sur l'ensemble des $n$ prochains tronçons, en fonction de contraintes imposées et des glissements latéraux et/ou longitudinaux estimés ;

   - une troisième phase dans laquelle, si ladite trajectoire peut-être suivie, on commande l'angle de braquage desdites roues avant (31) et la vitesse linéaire de traction dudit véhicule en fonction de l'état dudit véhicule et des glissements latéraux et/ou longitudinaux pour rallier le centre de l'essieu desdites roues arrière (32) sur ladite trajectoire ;

si la trajectoire ne peut être suivie, on effectue un nouvel alignement dudit véhicule vers ladite position cible et on génère une nouvelle trajectoire à suivre selon la première phase.

2. Procédé selon la revendication 1, **caractérisé en ce qu'**à chacune desdites positions intermédiaires comprise entre la position dudit véhicule et ledit $n^{ième}$ tronçon on définit la courbure $c_{ri}$ par :

$$c_{r_i} = \frac{2c_{r_0} + c_{r_{n-1}}}{3} \, ,$$

où $1 \leq i \leq n - 2$.

3. Procédé selon la revendication 1, **caractérisé en ce qu'**à chacune desdites positions intermédiaires comprise entre la position dudit véhicule et ledit $n^{ième}$ tronçon on définit la courbure $c_{r_i}$ par

$$c_{r_i} = \frac{2c_{r_{n-1}} + c_{r_0}}{n-1} i + c_{r_0} \, ,$$

où $1 \leq i \leq n - 2$.

4. Procédé selon l'une quelconque des revendications précédentes, **caractérisé en ce que** la loi de commande dudit angle de braquage $\beta_f$ des roues avant et arrière est obtenue selon un processus d'optimisation d'une fonction sous contrainte où la variable est un vecteur u composé de la dérivée par rapport à la distance $\beta'_f$ dudit angle de braquage, indépendamment du temps.

5. Procédé selon la revendication 4, **caractérisé en ce que** ladite loi de commande utilise un modèle cinématique dudit véhicule défini par l'ensemble des relations suivantes :

$$\begin{cases} \theta' &= \frac{(1+l^2 c_r^2)}{l}(\beta_f - \beta_c) - c_r^2 y \\ y' &= \theta \\ y'' &= \theta' \\ y''' &= \frac{(1+l^2 c_r^2)}{l}\beta'_f - c_r^2 y' \end{cases}$$

où :

- $(.)'$, $(.)''$, $(.)'''$ expriment respectivement les dérivées première, seconde et troisième par rapport à l'abscisse curviligne ;
- $\theta$ est l'erreur angulaire (rad) qui correspond à l'orientation dudit véhicule par rapport à la tangente au point référence de la trajectoire à suivre ;
- $y$ est l'erreur latérale qui correspond à la projection du centre de la roue arrière dudit véhicule sur le point référence de la trajectoire à suivre ;
- $l$ est l'empattement dudit véhicule ;
- $c_r$ est la courbure de la trajectoire à suivre ;
- $\beta_f$ est l'angle de direction réel de l'essieu avant du véhicule, en tenant compte du glissement $\delta_f$ ;
- $\beta_c$ est l'angle de direction désiré de l'essieu avant du véhicule pour suivre une trajectoire de courbure $c_r$.

6. Procédé selon l'une quelconque des revendications 4 ou 5, **caractérisé en ce qu'**un vecteur u est calculé pour chaque tronçon de ladite trajectoire.

7. Procédé selon l'une quelconque des revendications 4 à 6, **caractérisé en ce que** ladite contrainte est fonction desdites contraintes imposées dépendant de l'encombrement dudit véhicule.

8. Procédé selon l'une quelconque des revendications précédentes, **caractérisé en ce que** l'état dudit véhicule et les glissements sont issus d'une observation (22) de variables indépendantes de ladite trajectoire, lesdites variables étant :

      - les vitesses de rotation moyennes $\omega_f$ et $\omega_r$ des roues avant et arrière ;
      - les angles de direction desdites roues avant et arrière $\alpha_f$, $\alpha_r$ ;
      - les dérivées par rapport au temps $\dot{\alpha}_f$, $\dot{\alpha}_r$ desdits angles ;
      - la position ( $x_m$, $y_m$ ) et l'angle ($\theta_m$) d'un repère mobile (m) lié audit véhicule par rapport à un repère fixe (o).

9. Procédé selon l'une quelconque des revendications précédentes, **caractérisé en ce que** ledit véhicule est un bus de transport public, ledit bus étant conduit automatiquement à l'intérieur d'un centre de remisage de bus.

10. Dispositif de contrôle de la conduite automatique d'un véhicule d'un premier endroit donné (4, 3) vers un deuxième endroit donné (3, 4) formant une position cible, ledit véhicule étant soumis à des glissements latéraux et/ou longitudinaux des roues avant (31) et des roues arrière (32) lors de ses déplacements, **caractérisé en ce que** ledit dispositif étant apte à être embarqué dans ledit véhicule et à être relié au moins, via des interfaces appropriées, à des capteurs proprioceptifs, des capteur extéroceptifs et des moteurs d'actionnement de la direction et de la traction dudit véhicule, il comporte un calculateur mettant en œuvre le procédé selon l'une quelconque des revendications précédentes.

**Patentansprüche**

1. Verfahren zum automatischen Fahren eines Fahrzeugs von einem ersten gegebenen Ort (4, 3) zu einem zweiten gegebenen Ort (3, 4), der eine Zielposition bildet, wobei das Fahrzeug bei seinen Bewegungen lateralem und/oder longitudinalem Rutschen der Vorderräder (31) und der Hinterräder (32) ausgesetzt ist, **dadurch gekennzeichnet, dass** es mindestens die folgenden Phasen beinhaltet:

      - eine erste Phase, in der eine Bahn (33) erzeugt wird, der in Abhängigkeit vom Zustand des Fahrzeugs und der Zielposition zu folgen ist, wobei der Zustand durch die aktuelle Position und die Orientierung des Fahrzeugs definiert ist, wobei die Bahn (33) in eine Folge von Abschnitten unterteilt wird, deren Startpunkt eine Zwischenposition bildet;
      - eine zweite Phase, in der in der aktuellen Zwischenposition des Fahrzeugs:

            o eine Kurve für jeden von $n$ nächsten Abschnitten definiert wird, wobei die Kurve von einem Abschnitt zu dem nächsten Abschnitt gemäß einer Polynomfunktion der Krümmung $c_{r0}$ des Abschnitts an der aktuellen Position und der Kurve $c_{rn-1}$ des n-ten Folgeabschnitts variiert;
            o bevor das Fahrzeug eine Bewegung einleitet, in Abhängigkeit von auferlegten Beschränkungen und dem geschätzten lateralen und/oder longitudinalen Rutschen vorhergesagt wird, ob die Bahn über alle $n$ nächsten Abschnitte verfolgt werden kann;

      - eine dritte Phase, in der, wenn die Bahn verfolgt werden kann, der Einschlagswinkel der Vorderräder (31) und die lineare Antriebsgeschwindigkeit des Fahrzeugs in Abhängigkeit vom Zustand des Fahrzeugs und dem lateralen und/oder longitudinalen Rutschen gesteuert werden, um die Mitte der Achse der Hinterräder (32) auf die Bahn zu bringen;
      Neuausrichten, wenn die Bahn nicht verfolgt werden kann, des Fahrzeugs auf die Zielposition und Erzeugen gemäß der ersten Phase einer neuen Bahn, die verfolgt werden soll.

2. Verfahren nach Anspruch 1, **dadurch gekennzeichnet, dass** an jeder der Zwischenpositionen zwischen der Position des Fahrzeugs und dem n-ten Abschnitt die Kurve $c_{r_i}$ definiert wird durch:

$$c_{r_i} = \frac{2c_{r_0} + c_{r_{n-1}}}{3},$$

wobei $1 \leq i \leq n\text{-}2$.

3. Verfahren nach Anspruch 1, **dadurch gekennzeichnet, dass** an jeder der Zwischenpositionen zwischen der Position des Fahrzeugs und dem n-ten Abschnitt die Kurve $c_{r_i}$ definiert wird durch:

$$c_{r_i} = \frac{2c_{r_{n-1}} + c_{r_0}}{n-1} i + c_{r_0},$$

wobei $1 \leq i \leq n\text{-}2$.

4. Verfahren nach einem der vorherigen Ansprüche, **dadurch gekennzeichnet, dass** das Gesetz zur Steuerung des Einschlagswinkels $\beta_f$ der Vorder- und Hinterräder gemäß einem Optimierungsprozess einer Funktion unter Beschränkung erhalten wird, worin die Variable ein Vektor u ist, zusammengesetzt aus der Ableitung in Bezug auf den Abstand $\beta'_f$ des Einschlagswinkels, unabhängig von der Zeit.

5. Verfahren nach Anspruch 4, **dadurch gekennzeichnet, dass** das Steuergesetz ein kinematisches Modell des Fahrzeugs verwendet, definiert durch die Gesamtheit der folgenden Beziehungen:

$$\begin{cases} \theta' &= \frac{(1+l^2 c_r^2)}{l}(\beta_f - \beta_c) - c_r^2 y \\ y' &= \theta \\ y'' &= \theta' \\ y''' &= \frac{(1+l^2 c_r^2)}{l}\beta'_f - c_r^2 y' \end{cases}$$

worin:

- (. )', (. )", (. )''' jeweils die erste, zweite und dritte Ableitung in Bezug auf die gekrümmte Abszisse ausdrücken;
- $\theta$ der Winkelfehler (rad) ist, der der Orientierung des Fahrzeugs in Bezug auf die Tangente am Referenzpunkt der zu verfolgenden Bahn entspricht;
- $y$ der laterale Fehler ist, der der Projektion des Mittelpunkts des Hinterrads des Fahrzeugs auf den Referenzpunkt der zu verfolgenden Bahn entspricht;
- $l$ der Radstand des Fahrzeugs ist;
- $c_r$ die Kurve der zu verfolgenden Bahn ist;
- $\beta_f$ der tatsächliche Richtungswinkel der Vorderachse des Fahrzeugs unter Berücksichtigung des Rutschens $\delta_f$ ist;
- $\beta_c$ der gewünschte Richtungswinkel der Vorderachse des Fahrzeugs ist, um einer Bahn mit der Kurve $c_r$ zu folgen.

6. Verfahren nach Anspruch 4 oder 5, **dadurch gekennzeichnet, dass** ein Vektor u für jeden Abschnitt der Bahn berechnet wird.

7. Verfahren nach einem der Ansprüche 4 bis 6, **dadurch gekennzeichnet, dass** die Beschränkung von den auferlegten Beschränkungen abhängig ist, die von der Größe des Fahrzeugs abhängen.

8. Verfahren nach einem der vorherigen Ansprüche, **dadurch gekennzeichnet, dass** der Zustand des Fahrzeugs und das Rutschen aus einer Beobachtung (22) von von der Bahn unabhängigen Variablen stammen, wobei die Variablen die Folgenden sind:

- die mittleren Drehgeschwindigkeiten $\omega_f$ und $\omega_r$ der Vorder- und Hinterräder;
- die Richtungswinkel der Vorder- und Hinterräder $\alpha_f$, $\alpha_r$;
- die zeitbezogenen Ableitungen $\dot{\alpha}_f$, $\dot{\alpha}_r$ der Winkel;
- die Position ($x_m$, $y_m$) und der Winkel ($\theta_m$) eines mit dem Fahrzeug verbundenen beweglichen Bezugsrahmens (m) in Bezug auf einen festen Bezugsrahmen (o).

9. Verfahren nach einem der vorherigen Ansprüche, **dadurch gekennzeichnet, dass** das Fahrzeug ein Bus des öffentlichen Verkehrs ist, wobei der Bus automatisch innerhalb eines Busdepots gefahren wird.

10. Vorrichtung zum Steuern des automatischen Fahrens eines Fahrzeugs von einem ersten gegebenen Ort (4, 3) zu einem zweiten gegebenen Ort (3, 4), der eine Zielposition bildet, wobei das Fahrzeug bei seinen Bewegungen lateralem und/oder longitudinalem Rutschen der Vorderräder (31) und der Hinterräder (32) unterworfen ist, **dadurch gekennzeichnet, dass** da die Vorrichtung zum Einbauen in das Fahrzeug und zum Verbinden mindestens, über geeignete Schnittstellen, mit propriozeptiven Sensoren, exterozeptiven Sensoren und Motoren zur Betätigung der Lenkung und des Antriebs des Fahrzeugs geeignet ist, sie einen Rechner umfasst, der das Verfahren nach einem der vorherigen Ansprüche durchführt.

**Claims**

1. A method for automatically driving a vehicle from a given first point (4, 3) to a given second point (3, 4) forming a target position, said vehicle being subject to lateral and/or longitudinal slips of the front wheels (31) and of the rear wheels (32) in its movements, **characterised in that** it contains at least the following phases:

   - a first phase in which a path (33) to be followed is generated as a function of the state of said vehicle and of said target position, said state being defined by the current position and the orientation of said vehicle, said path (33) being subdivided into a series of sections, the starting point of which forms an intermediate position;
   - a second phase in which, at the current intermediate position of said vehicle:

      o a curvature is defined for each of $n$ next sections, said curvature varying from one section to the next according to a polynomial function of the curvature $c_{r_0}$ of the section at said current position and of the curvature $c_{r_{n-1}}$ of the next $n^{th}$ section;
      o a prediction is made, before said vehicle engages a movement, as to whether said path can be followed over all of the $n$ next sections, as a function of imposed constraints and of the estimated lateral and/or longitudinal slips;

   - a third phase in which, if said path can be followed, the steering lock angle of said front wheels (31) and the linear traction speed of said vehicle are controlled as a function of the state of said vehicle and of the lateral and/or longitudinal slips to line up the centre of the axle of said rear wheels (32) on said path;
   if the path cannot be followed, said vehicle is realigned towards said target position and a new path to be followed is generated according to the first phase.

2. The method according to claim 1, **characterised in that**, at each of said intermediate positions comprised between the position of said vehicle and said $n^{th}$ section, the curvature $c_{r_i}$ is defined by: $c_{r_i} = \dfrac{2c_{r_0} + c_{r_{n-1}}}{3}$ , in which $1 \le i \le n$ - 2.

3. The method according to claim 1, **characterised in that**, at each of said intermediate positions comprised between the position of said vehicle and said $n^{th}$ section, the curvature $c_{r_i}$ is defined by: $c_{r_i} = \dfrac{2c_{r_{n-1}} + c_{r_0}}{n-1} i + c_{r_0}$ , in which $1 \le i \le n$ - 2.

4. The method according to any one of the preceding claims, **characterised in that** the law controlling said steering lock angle $\beta_f$ of the front and rear wheels is obtained according to a process of optimisation of a constrained function in which the variable is a vector u composed of the derivative relative to the distance $\beta'_f$ of said steering lock angle, independently of time.

5. The method according to claim 4, **characterised in that** said control law uses a kinematic model of said vehicle defined by the set of the following relationships:

$$\begin{cases} \theta' &= \dfrac{(1+l^2 c_r^2)}{l}(\beta_f - \beta_c) - c_r^2 y \\ y' &= \theta \\ y'' &= \theta' \\ y''' &= \dfrac{(1+l^2 c_r^2)}{l}\beta'_f - c_r^2 y' \end{cases}$$

where:

- (. )', (. )", (. )''' respectively express the first, second and third derivatives relative to the curvilinear abscissa;
- $\theta$ is the angular error (rad) which corresponds to the orientation of said vehicle relative to the tangent at the reference point of the path to be followed;
- y is the lateral error which corresponds to the projection of the centre of the rear wheel of said vehicle on the reference point of the path to be followed;
- $l$ is the wheelbase of said vehicle;
- $c_r$ is the curvature of the path to be followed;
- $\beta_f$ is the real steering angle of the front axle of the vehicle, taking into account the slip $\delta_f$;
- $\beta_c$ is the desired steering angle of the front axle of the vehicle to follow a path of curvature $c_r$.

6. The method according to either one of claims 4 and 5, **characterised in that** a vector u is calculated for each section of said path.

7. The method according to any one of claims 4 to 6, **characterised in that** said constraint is a function of said imposed constraints dependent on the bulk of said vehicle.

8. The method according to any one of the preceding claims, **characterised in that** the state of said vehicle and the slips are derived from an observation (22) of variables independent of said path, said variables being:

   - the average rotation speeds $\omega_f$ and $\omega_r$ of the front and rear wheels;
   - the steering angles of said front and rear wheels $\alpha_f$, $\alpha_r$;
   - the derivatives relative to time $\dot{\alpha}_f$, $\dot{\alpha}_r$ of said angles;
   - the position $(x_m, y_m)$ and the angle $(\theta_m)$ of a mobile reference frame (m) linked to said vehicle relative to a fixed reference frame (o).

9. The method according to any one of the preceding claims, **characterised in that** said vehicle is a public transport bus, said bus being driven automatically inside a bus storage centre.

10. A device for controlling the automatic driving of a vehicle from a given first point (4, 3) to a given second point (3, 4) forming a target position, said vehicle being subject to lateral and/or longitudinal slips of the front wheels (31) and of the rear wheels (32) in its movements, **characterised in that**, said device being able to be embedded in said vehicle and to be linked at least, via appropriate interfaces, to proprioceptive sensors, exteroceptive sensors and motors actuating the steering and the traction of said vehicle, it comprises a computer implementing the method according to any one of the preceding claims.

FIG.1

FIG.2

FIG.3

## RÉFÉRENCES CITÉES DANS LA DESCRIPTION

**Documents brevets cités dans la description**

- FR 1501414

- FR 1455049

**Littérature non-brevet citée dans la description**

- Trajectory tracking for unicycle-type and two-steering-wheels mobile robots. **A. MICAELLI ; C. SAMSON.** Research Report RR-2097. INRIA, 1993